## Europäisches Patentamt

## European Patent Office

## Office européen des brevets

(11) Veröffentlichungsnummer: **0 073 478**

**B1**

(12) # EUROPÄISCHE PATENTSCHRIFT

(45) Veröffentlichungstag der Patentschrift:
29.04.87

(51) Int. Cl.⁴: **B 60 R 19/30**

(21) Anmeldenummer: **82107832.6**

(22) Anmeldetag: **26.08.82**

(54) **Biegefestes Bauteil, insbesondere Stossstange für Fahrzeuge.**

(30) Priorität: 02.09.81 DE 3134715

(43) Veröffentlichungstag der Anmeldung:
09.03.83 Patentblatt 83/10

(45) Bekanntmachung des Hinweises auf die Patenterteilung:
29.04.87 Patentblatt 87/18

(84) Benannte Vertragsstaaten:
DE FR GB IT NL SE

(56) Entgegenhaltungen:
FR-A-2 127 971
FR-A-2 293 339
FR-A-2 321 406
FR-A-2 366 960
FR-A-2 416 139

(73) Patentinhaber: BASF Aktiengesellschaft, Carl-Bosch- Strasse 38, D-6700 Ludwigshafen (DE)

(72) Erfinder: Buehrle, Hans, An der Froschlache 23, D-6700 Ludwigshafen (DE)
Erfinder: Lindner, Edmund, Edenkobener Strasse 9, D-6700 Ludwigshafen (DE)
Erfinder: Lohrbaecher, Volker, Kisslichstrasse 1, D-6940 Weinheim (DE)
Erfinder: Pirker, Alfred, Kalmitstrasse 3A, D-6710 Frankenthal (DE)
Erfinder: Strickle, Erich, Max- von- Seubert-Strasse 62, D-6800 Mannheim (DE)

EP 0 073 478 B1

LIBER, STOCKHOLM 1987

**Beschreibung**

Die Erfindung bezieht sich auf ein biegefestes Bauteil, insbesondere Stoßstange für Fahrzeuge, mit einem durch Blasformen oder Doppelstreckziehen hergestellten Grundkörper aus thermoplastischem Kunststoff, der einen in Längsrichtung verlaufenden Hohlraum mit wechselndem Querschnitt aufweist, an seiner Auflagefläche mit Befestigungseinrichtungen versehen ist und eine zumindest näherungsweise ebene Vorderwand sowie eine durch Einbuchtungen profilierte Rückwand besitzt.

Freitragende Bauteile, wie z.B. Stoßstangen für Fahrzeuge, sollen einerseits in der Lage sein, auftreffende Stöße so abzufangen, daß zumindest bei geringerer Aufprallenergie Beschädigungen des Fahrzeugs vermieden werden. Sie sollen außerdem die Aufprallenergie durch Eigenverformungen aufnehmen, wobei ein durch Materialeigenschaften und -gestaltung erzielter Dämpfungseffekt ein spontanes Zurückbilden dieser Verformungen vermeiden soll. Schließlich soll die Stoßstange erlittene Verformungen nach einer gewissen Zeit selbst zurückbilden. Aus Kostengründen sollte das Bauteil möglichst in einem Arbeitsgang hergestellt werden können, ohne daß zusätzliche Versteifungen oder Abstützungen oder das Einbringen von seinen Hohlraum ausfüllenden Füllmitteln notwendig ist.

Nach der DE-B- 21 10 544 ist ein Schutzpolster, insbesondere eine Stoßstange für Fahrzeuge bekannt, bestehend aus einem elastischen Mantel und einem darin eingelagerten, durch Druck verformbaren und sich in seiner Form verzögernd rückbildenden Kern aus Schaumstoff. Die für Stoßstangen erforderlichen Eigenschaften werden hierbei wesentlich durch das eingelagerte Schaumpolster erreicht.

Die DE-C-25 36 766 beschreibt eine Zier- oder Schutzleiste mit einem Grundkörper aus thermoplastischem Kunststoff, der im Hohlkörperblasverfahren hergestellt ist. Da aber Schutzleisten der hier beschriebenen Art, stets vollflächig auf einem tragenden Grundkörper, wie z.B. der Karosserie oder der eigentlichen Stoßstange, aufgesetzt sind, fehlt diesen Leisten eine wesentliche Eigenschaft, nämlich die selbsttragende Funktion, die die Biegefestigkeit einer als Balken auf zwei Stützen gestalteten Stoßstange erfordert.

Weiterhin beschreibt die FR-A-2 366 960, gemäß dem Oberbegriff des Anspruchs 1, einen Stoßfänger aus polymerem Material, welcher aus einem Mittelteil und zwei ein- oder angesetzten Endstücken besteht. Der Mittelteil ist im wesentlichen geradlinig mit geschlossenem kastenförmigem Umriß ausgebildet. Seine Rückwand weist eingezogene Bereiche auf, die mit der Vorderwand in Berührung gebracht und mit ihr verbunden sind. Die eingezogenen Bereiche sind indes nur in Teilbereichen des Mittelteils vorhanden und können demzufolge nur in diesen steifigkeitserhöhend wirken. Darüber hinaus ist die Herstellung eines solchen Stoßfängers verhältnismäßig aufwendig, da für den Mittelteil und die zwei Endstücke jeweils separate Werkzeuge bereitgestellt und die Teile anschließend in einem zusätzlichen Arbeitsgang miteinander verbunden werden müssen.

Es war daher Aufgabe der Erfindung, ein Bauteil zu schaffen, das in selbsttragender Bauweise, d.h. nicht in seiner vollen Länge auf einem tragenden Stützkörper aufliegend, in der Lage ist, Stöße und Biegebeanspruchungen aufzunehmen sowie Stoßenergie durch eine ausreichende Eigenverformung aufzunehmen, insbesondere Verformungen bis zu einem gewissen Maße verzögert und ohne zurückbleibende Schäden aufzunehmen. Außerdem soll das Bauteil in einem Arbeitsgang hergestellt werden können.

Zur Lösung dieser Aufgabe werden die im Kennzeichen des Anspruchs 1 angegebenen Maßnahmen vorgeschlagen.

Für das erfindungsgemäße Bauteil eignen sich die für die Herstellung blasgeformter Hohlkörper üblicherweise verwendeten thermoplastischen Kunststoffe, beispielsweise Polyamide, Polycarbonat, Copolymerisate des Styrols sowie Polymerisate des Propylens und des Ethylens. Besonders geeignet sind Polyethylene mit einer Dichte von 0,94 bis 0,965 $g/cm^3$ und einem Schmelzindex MFI 190/21,6 nach DIN 53 735 von 1,5 bis 25 g/10 min, welche eine für den vorliegenden Zweck besonders günstige Kombination von Festigkeit, Schlagzähigkeit, Elastizitätsmodul und Dämpfung besitzen. Die Kunststoffe können mit den üblichen Zusatzstoffen zur weiteren Erhöhung der Steifigkeit und Schlagzähigkeit modifiziert sein.

Die Festigkeit und Steifigkeit des Bauteils wird erfindungsgemäß durch eine entsprechende Profilierung seines Querschnitts erreicht. Diese ist so gestaltet, daß sie ein aus der Biegebeanspruchung und dem Lastangriff verursachtes örtliches Einknicken der Bauteilwandungen weitgehend verhindert, wobei die Profilierung im wesentlichen auf der in der Einbaulage des Bauteils, beispielsweise in einem Fahrzeug nicht sichtbaren Rückseite liegt, da die Gestaltung der vorderen Sichtseite nicht immer mit den technisch erforderlichen Gestaltungsgrundsätzen eines Biegeträgers zu vereinbaren ist.

Zur Herstellung solcher einteiliger Bauteile eignen sich besonders das Blasformen und das Doppelstreckziehverfahren. Durch diese Herstellverfahren bedingt ist die Profilierung der Rückseite nicht beliebig und ausschließlich nach festigkeitstechnischen Gesichtspunkten wählbar, da für die Formung gewisser Wandbereiche nur eine begrenzte Ausgangswandzone des Vorformlings (beim Blasformen) oder der zu verformenden Platten (beim Doppelstreckziehen) bereitsteht.

Zweckmäßige Weiterbildungen des erfindungsgemäßen Bauteils ergeben sich aus den Unteransprüchen 2 bis 8.

Die Erfindung wird nachfolgend anhand der Zeichnungen näher erläutert.

Es zeigt

Figur 1 einen Schnitt durch eine Stoßstange mit der für die Lastaufnahme erforderlichen Gestaltung ihrer Wandungen,

Figur 2 die Lagerung der Stoßstange an ihren Befestigungspunkten A und B sowie eine angenommene Last P,

Figur 3 eine Innenansicht der Stoßstangen-Rückseite in perspektivischer Darstellung,

Figur 4 die Stoßstangen-Rückseite gemäß Figur 3 im Querschnitt,

Figur 5 eine weitere Ausführungsform im Querschnitt und

Figur 6 einen Längsschnitt gemäß der Linie I-I der Figur 4.

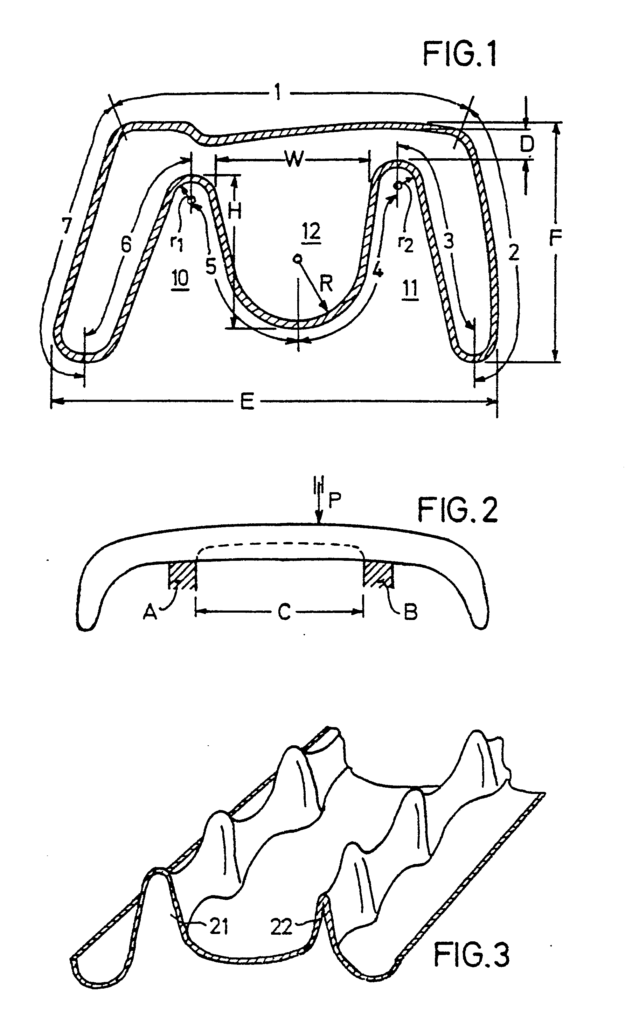

Gemäß Figur 1 besteht die Stoßstange im wesentlichen aus einem Grundkörper, der auf seiner Vorderseite (1) eine glatte oder verhältnismäßig wenig verrippte bzw. profilierte Fläche, auf der Rückseite aber in seiner einfachsten Ausführung zwei tiefe Einbuchtungen (10, 11) besitzt. Zwischen diesen beiden Einbuchtungen liegt eine Ausbuchtung (12).

Der Umfang dieses Grundkörper-Profils ist zur besseren Darstellung in die Bereiche 1 bis 7 aufgeteilt, wobei die Bereiche 2 und 7, 3 und 6 sowie 4 und 5 aus Symmetriegründen auch jeweils gleich ausgeführt sein können. Die Wanddicken in den Bereichen 1, 2, 3, 6, 7 sind unter sich im wesentlichen gleich, können aber auch weitgehend frei festgelegt werden. Dagegen ist der Verlauf der Wanddicke in den Bereichen 4 und 5 von den Maßen W, H und R abhängig. Die Bereiche 4 und 5 tragen umso mehr zu einer Erhöhung des Widerstandsmomentes des Trägers bei, je grösser die Wanddicke im Bereich des Bogenscheitels mit dem Radius R und je größer die Höhe H der Ausbuchtung (12) ist.

Eine Optimierung läßt sich erreichen, wenn das Verhältnis Basislänge W zu Höhe H der Ausbuchtung etwa 1,0 bis 2,0, vorzugsweise 1,4 bis 1,8 und das Verhältnis Basislänge W zum Radius R der Ausbuchtung etwa 2,0 bis 3,5 beträgt.

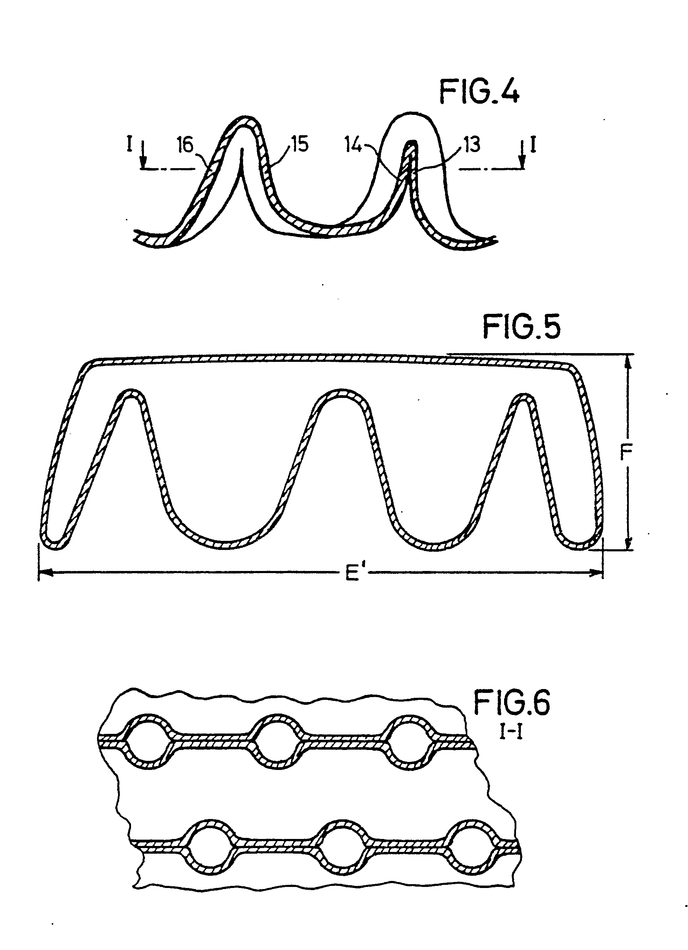

Die Größe des Maßes H und damit die erreichbare Biegefestigkeit des Trägers ist somit umso größer, je größer das Maß W ist. Die beiden Radien r1 und r2 sind deshalb möglichst klein zu halten, damit möglichst viel Platz für das Maß W zur Verfügung steht. Ein besonders großes Maß W läßt sich erreichen, wenn man die Wandbereiche (3), (4), (5) und (6) des Grundkörpers nicht als ununterbrochene Wellen sondern als eine Folge von hohlen, hökerförmigen Stützkörpern (21) und dazwischenliegenden Versteifungswänden (22) ausbildet. In Figur 4 sind die den Stützkörper (21) bildenden Wände mit (15) und (16) bezeichnet, während die Versteifungswände (22) aus den Wandteilen (13) und (14) bestehen. Eine besonders günstige Anordnung liegt dann vor, wenn sich Stützkörper (21) und Versteifungswände (22) jeweils gegenüberliegen (Figur 6). Die Wandbereiche (4, 5) bzw. (21, 22) können sich auch nur über einen Teil der Länge des Grundkörpers erstrecken. Sie können beispielsweise dort verkleinert bzw. weggelassen werden, wo die Biegebeanspruchung bzw. die zu erwartende Stoßbelastung geringer ist.

Durch den Abstand D zwischen den Scheiteln der Einbuchtungen (10, 11) bzw. der Stützkörper (21) einerseits und der Innenseite der Grundkörpervorderwand (1) andererseits kann die Charakteristik der Lastaufnahme der Stoßstange variiert werden. Der Grundkörper ist umso steifer, je kleiner das Maß D ist und am steifsten, wenn bei D = 0, die aneinanderliegenden Wandteile also miteinander punkt- oder linienförmig verbunden sind. Im allgemeinen wird D zwischen 0 und 20 mm gewählt.

Die einfachste Ausführungsform des Grundkörpers mit zwei wellenförmigen Einbuchtungen (10, 11) auf seiner Rückseite ist dann sinnvoll, wenn das Querschnittsverhältnis E / F zwischen Gesamtbreite E und Gesamthöhe F des Grundkörpers nicht größer als etwa 1,5 ist. Wird dieses Verhältnis größer (E' / F), muß die Zahl der rückwärtigen Einbuchtungen vergrößert werden (Figur 5).

Nach einem weiteren Merkmal der Erfindung ist es möglich, verschiedene Wandbereiche des Grundkörpers aus unterschiedlichen Kunststoffen zu fertigen. So kann beispielsweise bei dem Grundkörper nach Fig. 1 der durch äußere Schlag- oder Kratzeinwirkungen beanspruchte und durch die Wandzonen 1, 2 und 7 gekennzeichnete Bereich aus einem Kunststoff hergestellt werden, der besonders kratzfest und schlagunempfindlich ist, während die die Profilierung aufweisende Rückseite, d.h. die Bereiche 3, 4, 5, 6 aus einem Kunststoff hoher Steifigkeit gefertigt wird.

## Patentansprüche

1. Biegefestes Bauteil, insbesondere Stoßstange für Fahrzeuge, mit einem durch Blasformen oder Doppelstreckziehen hergestellten Grundkörper aus thermoplastischem Kunststoff, der einen in Längsrichtung verlaufenden Hohlraum mit wechselndem Querschnitt aufweist, an seiner Auflagefläche mit Befestigungseinrichtungen versehen ist und eine zumindest näherungsweise ebene Vorderwand (1) sowie eine durch Einbuchtungen (10,11) profilierte Rückwand (3, 4, 5, 6) besitzt, dadurch gekennzeichnet, daß die Einbuchtungen (10, 11) wellenförmig ausgebildet sind und sich in Längsrichtung im wesentlichen bis in die Endbereiche des Grundkörpers erstrecken und daß zwischen den Einbuchtungen wenigstens eine Ausbuchtung (12) vorgesehen ist.

2. Biegefestes Bauteil nach Anspruch 1, dadurch gekennzeichnet, daß die Einbuchtungen (10, 11) aus Reihen von hohlen, hökerförmigen Stützkörpern (21) und zwischen diesen angeordneten Wandteilen (22) gebildet werden.

3. Biegefestes Bauteil nach Anspruch 2, dadurch gekennzeichnet, daß die Stützkörper (21) einer Reihe den Wandteilen (22) der anderen Reihe gegenüberliegen.

4. Biegefestes Bauteil nach den Ansprüchen 1 bis 3, dadurch gekennzeichnet, daß das Verhältnis der Basislänge W zur Höhe H der Ausbuchtung (12) etwa 1,0 bis 2,0 beträgt.

5. Biegefestes Bauteil nach den Ansprüchen 1 bis 4, dadurch gekennzeichnet, daß das Verhältnis der Basislänge W zum Radius R der Ausbuchtung (12) etwa 2 bis 3,5 beträgt.

6. Biegefestes Bauteil nach den Ansprüchen 1 bis 5, dadurch gekennzeichnet, daß der Abstand D zwischen den Scheiteln der Einbuchtungen (10, 11) bzw. der Stützkörper (21) und der Innenseite der Vorderwand (1) zwischen 0 und 20 mm beträgt.

7. Biegefestes Bauteil nach Anspruch 6, dadurch gekennzeichnet, daß die Scheitel der Einbuchtungen (10, 11) bzw. der Stützkörper (21) mit der Innenseite der Vorderwand (1) punkt- oder linienförmig verbunden sind.

8. Biegefestes Bauteil nach den Ansprüchen 1 bis 7, dadurch gekennzeichnet, daß einzelne Wandbereiche des Grundkörpers aus unterschiedlichen Kunststoffen bestehen.

## Claims

1. A component which is resistant to bending, especially a bumper for road vehicles, comprising a body produced by blow moulding a parison, or by two-sheet blowing, and consisting of a thermoplastic, which body has a cavity varying in cross section and extending in the longitudinal direction, is provided with fastening means on its mounting surface, and possesses a front wall (1) that is at least approximately flat, as well as a rear wall (3,4,5,6) with recesses (10,11), wherein, the recesses (10,11) are in the form of waves and extend in the longitudinal direction up to the end regions of the body, and wherein at least one bulge (12) is provided between the recesses.

2. A component which is resistant to bending, as claimed in claim 1, wherein the recesses (10,11) are formed from rows of hollow, humpshaped supports (21) and wall portions (22) arranged between these supports.

3. A component which is resistant to bending, as claimed in claim 2, wherein the supports (21) of one row face the wall portions (22) of the other row.

4. A component which is resistant to bending, as claimed in claims 1 to 3, wherein the ratio of the base length W to the height H of the bulge (12) is about 1.0 to 2.0.

5. A component which is resistant to bending, as claimed in claims 1 to 4, wnerein the ratio of the base length W to the radius R of the bulge (12) is about 2 to 3.5.

6. A component which is resistant to bending. as claimed in claims 1 to 5, wherein the distance D between the peaks of the recesses (10, 11), i.e. of the supports (21), and the inner surface of the front wall (1) is between 0 and 20 mm.

7. A component which is resistant to bending, as claimed in claim 6, wherein the peaks of the recesses (10, 11), i.e. of the supports (21), are connected punctiformly or linearly to the inner surface of the front wall (1).

8. A component which is resistant to bending, as claimed in claims 1 to 7, wherein individual wall regions of the body consist of different plastics materials.

## Revendications

1.- Pièce de construction résistant à la flexion, en particulier pare-chocs pour véhicules comportant un corps de base en matière de synthèse thermoplastique fabriqué par soufflage dans un moule ou double étirage, qui présente une cavité s'étendant en direction longitudinale et à section alternante, est muni, sur sa face d'appui, de moyens de fixation et possède une paroi avant (1) au moins approximativement plane, ainsi qu'une paroi arrière (3, 4, 5, 6) profilée par des dentelures (10, 11), caractérisée par le fait que les dentelures (10, 11) ont une forme ondulée et s'étendent, en direction longitudinale, sensiblement jusque dans la zone d'extrémité du corps de base et il est prévu, entre les dentelures, au moins un renflement (12).

2.- Pièce de construction résistant à la flexion, selon la revendication 1, caractérisée par le fait que les dentelures (10, 11) sont formées par une série de corps d'appui (21) creux, en forme de bosse et de parties de paroi (22) disposées entre eux.

3.- Pièce de construction résistant à la flexion, selon la revendication 2, caractérisée par le fait que les corps d'appui (21) d'une série font face aux parties de paroi (22) de l'autre série.

4.- Pièce de construction résistant à la flexion, selon les revendications 1 à 3, caractérisée par le fait que le rapport entre la longueur de base W et la hauteur H du renflement (12) est d'environ 1,0 à 2,0.

5.- Pièce de construction résistant à la flexion, selon les revendications 1 à 4, caractérisée par le fait que le rapport entre la longueur de base W et le rayon R du renflement (12) est d'environ 2 à 3,5.

6.- Pièce de construction résistant à la flexion, selon les revendications 1 à 5, caractérisée par le fait que la distance D entre les sommets des dentelures (10, 11) ou des corps d'appui (21) et la face intérieure de la paroi avant (1) est comprise entre 0 et 20 mm.

7.- Pièce de construction résistant à la flexion, selon la revendication 6, caractérisée par le fait que les sommets des dentelures (10, 11) ou des corps d'appui (21) sont reliés par points, ou lignes,avec la face intérieure de la paroi avant (1).

8.- Pièce de construction résistant à la flexion, selon les revendications 1 à 7, caractérisée par le fait que certaines zones de paroi du corps da base sont en matières plastiques différentes.

FIG.1

FIG.2

FIG.3

FIG.4

FIG.5

FIG.6
I-I